# EUROPEAN PATENT APPLICATION

(11) **EP 1 262 858 A2**
(43) Date of publication of application: **04.12.2002**
(21) Application number: 02253568.6
(22) Date of filing: 21.05.2002
(51) Int. Cl.: G06F 1/00

(54) **Image data handling system, print generating system, and memory medium making system**

(30) Priority: 25.05.2001 JP 2001156848
(71) Applicant: KONICA CORPORATION, Tokyo (JP)
(72) Inventor: Igarashi, Takashi, Hino-shi, Tokyo 191-8511 (JP); Sawada, Katsutoshi, Hino-shi, Tokyo 191-8511 (JP); Ikeda, Hiroshi, Hino-shi, Tokyo 191-8511 (JP)
(74) Representative: Rees, Alexander Ellison

(57) **Abstract**

The image data handling system of the invention has therein a home server of a customer that is connected to the network and stores a print order including the image data of the customer or a part thereof, a retrieve server that is connected to the network and retrieves image data of the customer stored in the home server of the customer, and a retrieve right issuing server that is connected to the network and issues the right of the retrieve server to retrieve the image data of the customer stored in the home server of the customer. In the image data handling system, the home server of the customer allows the retrieve server to retrieve the image data of the customer stored in the home server when the retrieve server has a right to retrieve image data of the customer stored in the home server.

## Description

### BACKGROUND OF THE INVENTION

The present invention relates to an image data handling system, a print generating system and a memory medium making system, and in particular, to an image data handling system, a print generating system and a memory medium making system which make it possible to retrieve stored image data as occasion demands.

Image data generating apparatuses such as a digital camera, a scanner and others are spreading remarkable in recent years, owing to improvement of an image processing technology. With this spread, senses for digital images borne by users who are using the apparatuses have been raised, and the digital images have been used for various uses including preparation of a home page for the Internet and digital printing. In the case of conventional photofinishing labs which have made prints by using negative films, on the other hand, there have been increased services to handle digital image data, with the spread of digital cameras, in output centers, compact labs (small-sized photofinishing labs) and large-sized labs conducting centralized processing, and their service variations are diversified.

On the other hand, with the spread of the Internet to general homes, an example of the service to handle the digital image data which is carried out presently is one wherein a customer uploads image data, through the Internet, to the server that is administrated by a photofinishing lab, and then, the photofinishing lab makes prints based on the image data uploaded to offer them to the customer. The service of this kind has an advantage that the customer can place an order for prints of its own image data from its own house. In addition, with a tendency of the Internet toward the broader band, there is increasing the service to offer to a customer a memory area usable for a customer on the Internet.

Incidentally, when photographing by using a digital camera, for example, it is possible for a customer to photograph without fearing a failure because image data can be erased, which is different from photographing in a silver halide camera, resulting in a tendency that massive image data are accumulated in a short period of time. However, it is a troublesome and time-consuming work for a customer to select necessary image data from the massive ones and to upload the image data after accessing the server administrated by a photofinishing lab. Further, when a customer on the Internet has image data on the memory area which can be used by the customer freely, the customer is required to upload for an order for prints after downloading from the memory area, which requires much time. In addition, heavy load is applied on the memory area of the server in which images are stored, and a huge sum of investment is needed for preparation of the memory area.

For the problems stated above, it is also conceivable that a customer, for example, transfers only the desired image data from a digital camera to the memory area accessible from the Internet administrated by the customer to be stored therein, and makes the server on the photofinishing lab side periodically to access the memory area through the Internet, and allows downloading of the image data. However, under the such condition, those who can access the Internet can access the memory area optionally, resulting in the problem that a privacy must be protected.

Further, in the near future, those handled as household electric appliances such as a refrigerator, a TV set, a video and an air conditioner, other than portable communication remote terminals including a personal computer and a cell phone are expected to function as an IT household electric appliance capable of being controlled from the Internet. Further, when a global IP address connectible to the Internet is given to all ID household electric appliances with the popularization of the Ipv6 Standards, there is estimated an emergence of home-server-like products having a storage function for image data in an IT household electric appliance.

### SUMMARY OF THE INVENTION

The invention has been achieved in view of the problems mentioned above, and its object is to provide an image data handling system, a print generating system and a memory medium making system, wherein inconvenient points for a customer who is obliged to upload are eliminated, a privacy is protected and image data for desired prints can be retrieved through the Network.

The image data handling system of the invention has therein a home server of a customer that is connected to the Network and stores a print order including image data of the customer or a part thereof, a retrieve server that is connected to the network and retrieves image data of the customer stored in the home server of the customer, and a retrieve right issuing server that is connected to the Network and issues the right of the retrieve server to retrieve image data of the customer stored in the home server of the customer, and when the retrieve server has a right to retrieve image data of the customer stored in the home server, the home server of the customer allows the retrieve server to retrieve the image data of the customer stored in the home server, and thereby, the customer does not upload the image data by itself, and the retrieve server retrieves image data in the home server, thus, it is possible to make the work of the customer to transfer the image data for prints, for example, to be easy. Further, since the retrieve server only for which the retrieve right issuing server issued the right for retrieving is allowed to retrieve the image data, the retrieve for the third party who is not allowed is prohibited, and thereby a privacy is protected. "Retrieve" means a collection, and it means, for example, to collect image data stored in a home server of a customer, a printer order or a part thereof, and more concretely, it means that the photofinishing lab server who is given a retrieve right downloads image data from a home server of the customer. Incidentally, objects to be retrieved in this case are not only image data but also objects in the form of print products including information necessary for compiling image data and information of target for delivery, as shown in TOKKAI No. 2001-297238.

With regard to the right to retrieve, it is preferable that a customer gives to the retrieve right issuing server the necessary information for retrieving, for example, a set of a certification and a password both necessary for accessing, in a form of a print order, and in the retrieve right issuing server, the necessary information mentioned above and a print order are transferred to the retrieve server which conducts retrieving actually, as a retrieve right. When the retrieve server receives the retrieve right from the retrieve right issuing server as stated above, image data necessary for printing (or, information necessary for image formation on the print) can be downloaded from the home server of the customer.

Further, it is preferable that the right to retrieve is issued from the retrieve right issuing server based on permission for the retrieve right issuing server through the Network by the customer.

The image data handling system of the invention has therein an outside-home server that is connected to the Network and has a storage area which stores image data of a customer, a retrieve server that is connected to the Network and retrieves image data of the customer stored in the storage area for image data of the customer in the outside-home server, and a retrieve right issuing server that is connected to the Network and issues the right with which the retrieve server retrieves image data of the customer stored in the storage area of the customer in the outside-home server, and when the retrieve server has a right to retrieve image data of the customer stored in the storage area of the customer in the outside-home server, the outside-home server allows the retrieve server to retrieve the image data of the customer stored in the storage area of the customer in the outside-home server, and therefore, the customer does not need to upload image data by itself, and the retrieve server retrieves the image data in the outside-home server, thus, operations of the customer to transfer image data for printing, for example, can be made more easy. Further, since the right to retrieve is issued by the retrieve right issuing server, and the retrieve server only is allowed to retrieve image data, retrieving of the third party who is not allowed is prohibited, and thereby, a privacy is protected.

In addition, when the right to retrieve is issued from the retrieve right issuing server based on permission for the retrieve right issuing server through the Network by the customer, the customer, for example, can give permission through the Network, which is convenient.

The print generating system of the invention has therein a home server of a customer that is connected to the Network and stores image data of the customer, a retrieve server that is connected to the Network and retrieves image data of the customer stored in the home server of the customer, and a retrieve right issuing server that is connected to the Network and issues the right with which the retrieve server retrieves image data of the customer stored in the home server, and when the retrieve server has a right to retrieve image data of the customer stored in the home server, the home server of the customer allows the retrieve server to retrieve the image data of the customer stored in the home server, and has a printer that generates a print based on image data of the customer retrieved by the retrieve server, and therefore, the customer does not need to upload image data by itself, and the retrieve server retrieves the image data in the home server, thus, operations of the customer to transfer image data for printing, for example, can be made more easy. Further, since the right to retrieve is issued by the retrieve right issuing server, and the retrieve server only is allowed to retrieve image data, retrieving of the third party who is not allowed is prohibited, and thereby, a privacy is protected.

In addition, when the right to retrieve is issued from the retrieve right issuing server based on permission for the retrieve right issuing server through the Network by the customer, the customer, for example, can give permission through the Network, which is convenient.

The print generating system of the invention has therein an outside-home server that is connected to the Network and has a storage area which stores image data of a customer, a retrieve server that is connected to the Network and retrieves image data of the customer stored in the storage area for image data of the customer in the outside-home server, and a retrieve right issuing server that is connected to the Network and issues the right with which the retrieve server retrieves image data of the customer stored in the storage area of the customer in the outside-home server, and when the retrieve server has a right to retrieve image data of the customer stored in the storage area of the customer in the outside-home server, the outside-home server allows the retrieve server to retrieve the image data of the customer stored in the storage area of the customer in the outside-home server, and has a printer that generates a print based on image data of the customer retrieved by the retrieve server, and therefore, the customer does not need to upload image data by itself, and the retrieve server retrieves the image data in the home server, thus, operations of the customer to transfer image data for printing, for example, can be made more easy. Further, since the right to retrieve is issued by the retrieve right issuing server, and the retrieve server only is allowed to retrieve image data, retrieving of the third party who is not allowed is prohibited, and thereby, a privacy is protected.

In addition, when the right to retrieve is issued from the retrieve right issuing server based on permission for the retrieve right issuing server through the Network by the customer, the customer, for example, can give permission through the Network, which is convenient.

The memory medium making system of the invention has therein a home server of a customer that is connected to the Network and stores a print order including image data of the customer or a part thereof, a retrieve server that is connected to the network and retrieves image data of the customer stored in the home server of the customer, and a retrieve right issuing server that is connected to the Network and issues the right of the retrieve server to retrieve image data of the customer stored in the home server of the customer, and when the retrieve server has a right to retrieve image data of the customer stored in the home server, the home server of the customer allows the retrieve server to retrieve the image data of the customer stored in the home server, and it stores as digital data on the removable recording medium based on the image data of the customer retrieved by the retrieve server, and therefore, the customer does not need to upload image data by itself, and the retrieve server retrieves the image data in the home server, thus, operations of the customer to transfer image data for preparing a storage medium storing digital data can be made more easy. Further, since the right to retrieve is issued by the retrieve right issuing server, and the retrieve server only is allowed to retrieve image data, retrieving of the third party who is not allowed is prohibited, and thereby, a privacy is protected.

In addition, when the right to retrieve is issued from the retrieve right issuing server based on permission for the retrieve right issuing server through the Network by the customer, the customer, for example, can give permission through the Network, which is convenient.

The memory medium making system of the invention has therein an outside-home server that is connected to the Network and has a storage area which stores image data of a customer, a retrieve server that is connected to the Network and retrieves image data of the customer stored in the storage area for image data of the customer in the outside-home server, and a retrieve right issuing server that is connected to the Network and issues the right with which the retrieve server retrieves image data of the customer stored in the storage area of the customer in the outside-home server, and when the retrieve server has a right to retrieve image data of the customer stored in the storage area of the customer in the outside-home server, the outside-home server allows the retrieve server to retrieve the image data of the customer stored in the storage area of the customer in the outside-home server, and stores on the removable storage medium as digital data, and therefore, the customer does not need to upload image data by itself, and the retrieve server retrieves the image data in the home server, thus, operations of the customer to transfer image data for preparation of the storage medium storing digital data can be made more easy. Further, since the right to retrieve is issued by the retrieve right issuing server, and the retrieve server only is allowed to retrieve image data, retrieving of the third party who is not allowed is prohibited, and thereby, a privacy is protected.

In addition, when the right to retrieve is issued from the retrieve right issuing server based on permission for the retrieve right issuing server through the Network by the customer, the customer, for example, can give permission through the Network, which is convenient.

The image data mentioned in the specification usually mean digitized image data, and to be concrete, they include data obtained by quantizing and digitizing the information stored on an analog basis such as a transmission-type document like a negative film and a positive film and a reflection-type document like a photographic paper and a printed matter, data stored as digital information directly such as in a digital camera, and an image data drawn optionally by a customer on a computer (CG in general).

The removable storage medium in this case includes CD-R, CD-RW, DVD-R, DVD-RAM, a magneto-optical disk, a floppy disk, a compact flash, SmartMedia, Memory Stick, a multimedia card, SD card, HiFD, Zip and PD.

Incidentally, a home server is a server installed in a home of a customer, for example, and its form can be anything including a personal computer or the like, provided that the server has a storage area that can store image data and has a function to be connected with the Network. A retrieve server is a server which can access the home server (more strictly, an area where image data are stored) and can retrieve image data by using a retrieve right. An outside-home server is a storage equipment or a service that is set on the Internet, for example, for which a customer has an access right, and in a broad sense, the outside-home server represents those other than the home server. A right to retrieve is a right to download the data existing in a storage area of a home server or an outside-home server for the third party other than the customer, and it represents those generated by retrieve information sent from the customer.

Further, the Network is one wherein a computer system, a terminal and a data communication equipment are connected to each other. The connection may either be of the wire system such as private lines, public lines, power lines and optical fiber lines, or be of the wireless system, or be of their compound system. The so-called Internet is included in the network.

### BRIEF DESCRIPTION OF THE DRAWINGS

Fig. 1 is a schematic diagram showing a network system including an image data handling system, a print generating system or a memory medium making system relating to the first example.

Fig. 2 is a ladder-type chart showing a flow of the system relating to the present example.

Fig. 3 is a flow chart showing operations of the present example.

Fig. 4 is a flow chart showing operations of the variation of the present example.

Fig. 5 is a schematic diagram showing the network system relating to the second example.

### DETAILED DESCRIPTION OF THE INVENTION

The invention will be explained as follows, referring to the example.

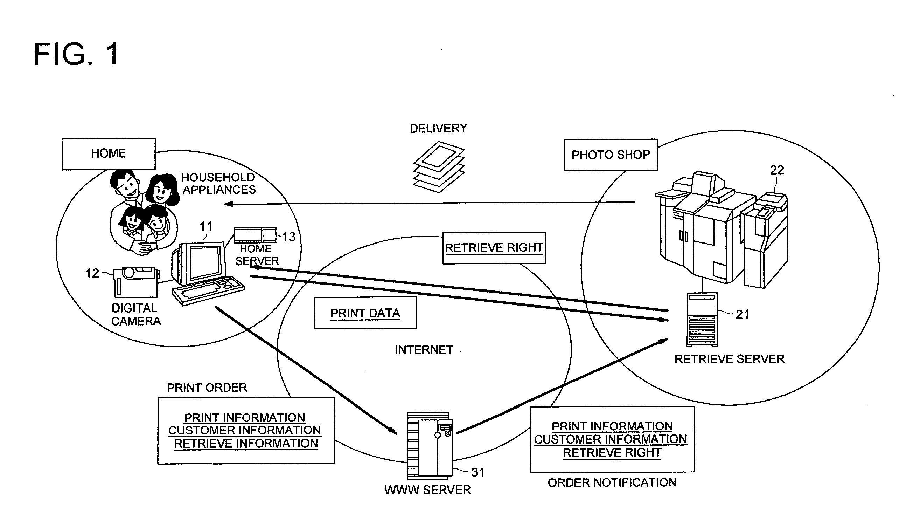

Fig. 1 is a schematic diagram showing a network system including an image data handling system, a print generating system or a memory medium making system relating to the present examples. Terminal (personal computer in this case) 11, digital still camera 12 and home server 13 equipped with a hard disk are connected to each other, and are connected, by the use of an unillustrated router or a modem, to WAN (Wide Area Network) represented by the network such as the Internet through an apparatus for connecting a terminal and LAN to the Internet. Incidentally, although the digital camera 12 is used in a form to be connected directly to the terminal in this case, it is also possible to move image data through the media such as a compact flash, SmartMedia, a magneto-optical disk, a floppy disk and CD-R, and it is further possible that those moved to the terminal may also be ones obtained by reading a photographic negative film, a positive film and a hard copy such as a photographic paper, or CG made by a customer, without being limited to image data obtained by a digital camera.

On the other hand, retrieve server 21 and printer 22 installed in a photo shop are connected to each other, and the retrieve server 21 is connected to the network such as the Internet. Further, separately from the foregoing, WWW server (retrieve right issuing server) 31 is connected to the network such as the Internet.

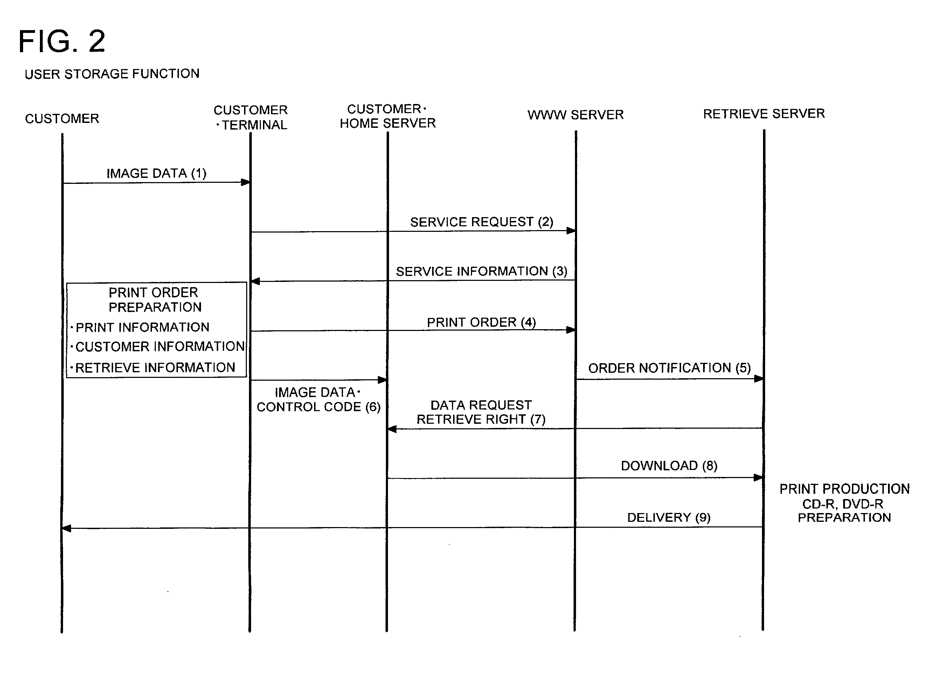

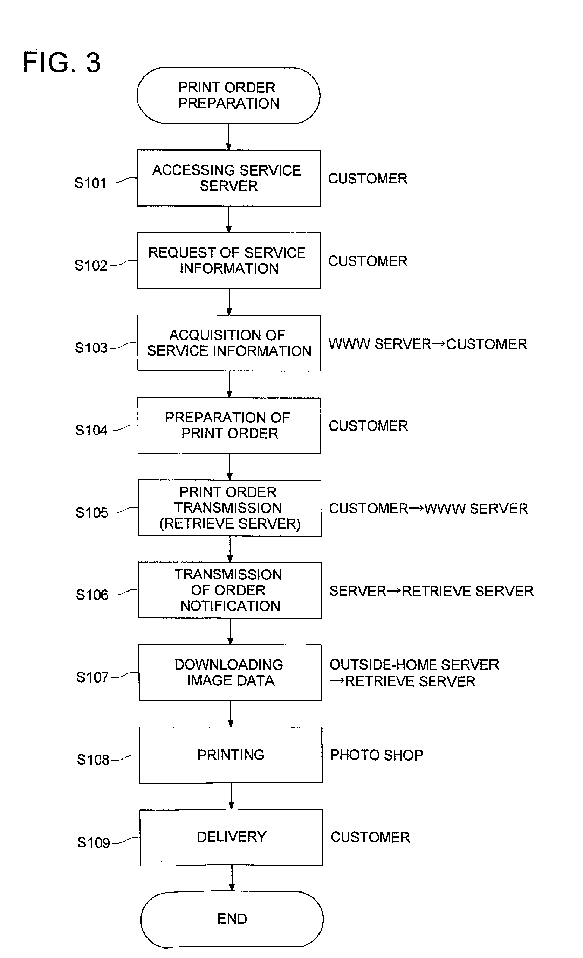

Fig. 2 is a ladder-type chart showing a flow of the system relating to the present example. Fig. 3 is a flow chart showing operations of the present example. Now, let it be assumed that a user desires to have a print made by a photo shop, based on image data obtained through photographing by, for example, digital still camera 12. In such a case, the customer requests the service (Step S102 in Fig. 3) by transferring image data to terminal 11 as shown in (1) in Fig. 2 and by accessing WWW server 31 (Step S101 in Fig. 3) as shown in (2) in Fig. 2. Requesting the service in this case means the following operations.
1) To access WWW server 31 through the Internet and thereby to obtain service information through a home page.
2) To refer to WWW server 31 wherein software connectible to the Internet is established in advance, at a certain timing (when starting up an application, for example) to confirm whether the updated service information is present or not, and to update if it is present.

Corresponding to this, the WWW server 31 transmits service information to terminal 11 of a customer as shown in (3) in Fig. 2, and the terminal 11 acquires this (step S103 in Fig. 3). The service information includes information of print types (including sizes) acceptable in photographic prints, prices, delivery and conditions for delivery. Further, for those whose template is updated in succession as in a post card, updating information therefor may be uploaded.

A customer confirms service information by observing a display of terminal 11, and obtains information necessary for ordering (a unit price, a name of the shop from which a print is received, a template and service types) to prepare the print order (step S104 in Fig. 3). The print order in this case includes print information, customer information and retrieve information. The print information is composed of information showing image data for conducting printing or its ID, information expressing the image itself such as image composing information and information necessary for printing operations showing print types, sizes and a quantity of prints. The customer information means information showing a customer represented by a person who places an order for prints, and it includes at least a name of the customer and an ID if the customer is a member of the photo shop. In addition to them, anything such as an address, a telephone number, an e-mail address, a credit number, a bank account number, a national pension number, a driver's license number and others can be included, if they can indicate the customer univocally. Information showing a delivery target for finished prints may further be added. Retrieve information means information necessary for accessing the storage of the customer from the print center side. For example, a storage location (one indicating a network address of home server 13) and certification information necessary to access the storage location are stored. These pieces of information may be correlated with a customer ID in the case of customer registration for preservation, and they may be in a form of "print information + customer ID". In this case, the customer ID becomes retrieve information. In addition, the print order itself may be positioned as information to allow retrieve.

A print order prepared by a customer is transmitted from terminal 11 to WWW sever 31 as shown in (4) in Fig. 2 (step S105 in Fig. 3). The WWW sever 31 that has received the print order transmits an order notification to retrieve server 21 as shown in (5) in Fig. 2 (step S106 in Fig. 3). The order notification includes print information, customer information and information that grants the right for retrieving. The print information and customer information transfer the information transmitted from terminal 11 on the customer side without taking any action on the information. Information granting the retrieve right means information to grant the right to download the image data from home server 13 of a customer, and to be concrete, it includes an internet address of home server 13 (and ID for certification and a password). In synchronization with the foregoing, the customer transfers image data from a hard disk of terminal 11 to a prescribed storage area of home server 13, as shown in (6) in Fig. 2. Incidentally, the image data may also be transferred automatically from terminal 11 to home server 13, concurrently with placing of a print order. When the home server is replaced with digital camera 12, it is not necessary to transfer the image data, which is a matter of course.

The retrieve server 21 that has received the order notification uses a retrieve right to access a prescribed storage area of home server 13 as shown in (7) in Fig. 2, and downloads (retrieves) all image data stored in the storage area, as shown in (8) in Fig. 2 (step S107 in Fig. 3). In this case, accessing home server 13 from a server having no retrieve right or from a computer is rejected, and thereby, a third party that is not permitted is prevented from obtaining image data, thus, a privacy is protected. Incidentally, if home server 13 is a constant-connection type, retrieve server 21 can access any time, but, when it is not a constant-connection type, a built-in timer, for example, is used so that home server 13 is connected only for the time zone from 4 o'clock to 6 o'clock in the morning when the frequency of communication is less, and a time zone for that connection is made to be included in information that grants a retrieve right, thus, it is possible to restrict the retrieve of retrieve server 21 within a range from 4 o'clock to 6 o'clock.

Downloaded image data are transferred from retrieve server 21 to printer 22 where a print is made (step S108 in Fig. 3). Further, when printer 22 has a function to record image data on a recording medium such as CD-R or DVD-R, it is also possible to conduct processing for recording image data on a recording medium simultaneously with or in place of print making. The print (or a recording medium) thus obtained is to be delivered from a photo shop to a customer through a means of mailing or a means of door-to-door delivery as shown in (9) in Fig. 2 (step S109 in Fig. 3). Incidentally, if image data are erased at the moment when a print is completed, it is preferable for privacy protection, and it is preferable because the storage capacity of the retrieve server 21 can be kept to be low.

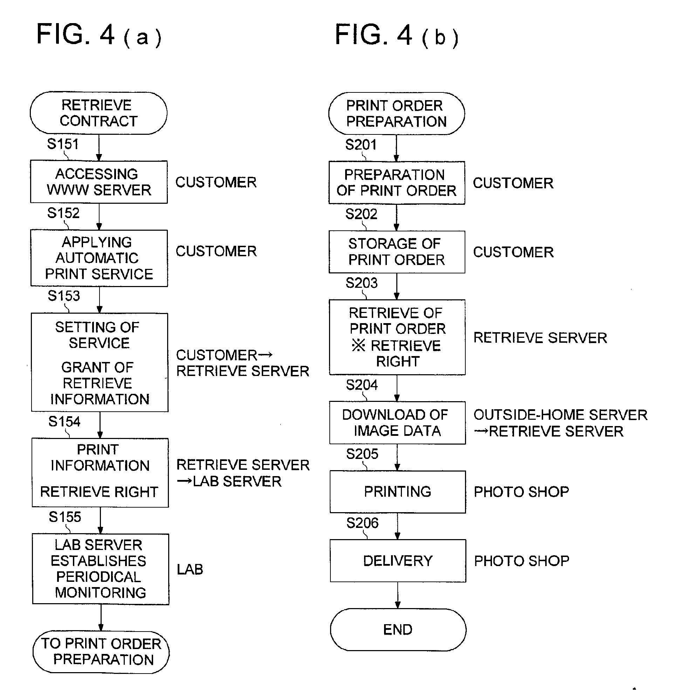

Figs. 4 (a) and 4 (b) represent a flow chart showing operations related to the variation of the present example. In this variation, it is possible to retrieve for each print order including image data, without accessing WWW server 31 every time. Let it be assumed that retrieve server 21 stores in advance an internet address of terminal 11 on the customer side in each variation. First, Fig. 4 (a) will be used for the explanation. A customer accesses WWW server 31 (step S151), and concludes a contract to make a print automatically for image data stored in the prescribed storage area of the customer or a print order, unconditionally or within a range of a certain amount of money (step S152). The customer gives to the WWW server 31 the information necessary for the retrieve (step S153), then, the WWW server 31 generates retrieve right from the information relating to the received retrieve and issues retrieve right for a lab server that makes a print for the customer, namely, for the retrieve server 21 (step S154), while, the lab server 21 that has received the retrieve right establishes a monitoring timing such as timing at intervals of 24 hours, or 12 hours, or at a timing at 1:00 on Friday every week (step S155). The retrieve is conducted in the sequence shown in Fig. 4 (b).

In step S201 in Fig. 4 (b), a customer prepares a print order based on the program installed in terminal 11 in Fig. 1. A concrete example of the print order in this case is one shown in TOKUGAN No. 2000-019504. The customer stores the prepared print order and image data for the desired print in the prescribed storage area of terminal 11, in step S202. With respect to the print order, it includes the information stated above.

Retrieve server 21 in a photo shop accesses periodically a prescribed storage area on terminal 11 through the Network. In this case, when a print order is present on the prescribed storage area, the retrieve is judged to be permitted because retrieve information is included, and the retrieve right is used to download the stored image data in step S204. The image data thus downloaded are transferred from the retrieve server 21 to printer 22 where a print is made (S205). The print thus made is delivered from the photo shop to the customer through a means of mailing or a means of door-to-door delivery (S206).

Further, the following is also conceivable as a variation of the example stated above. A customer concludes a contract for WWW server 31, and specific retrieve information is given in advance. The WWW server 31 gives a retrieve right based on retrieve information to retrieve server 21 of a photo shop where a print is made, and the retrieve server 21 downloads image data or print product unconditionally and forcibly, when image data and print product are present on a home server (a personal computer, a digital camera or the like) corresponding to the specific internet address included in the retrieve information. The downloaded image data are transferred from the retrieve server 21 to the printer 22, and a print is made based on the downloaded image data. Namely, if a customer stores image data in the prescribed storage area of the home server, the image data are automatically retrieved and prints are made, which saves the customer time and labor. Further, by ensuring security of the WWW server, it is possible to prevent that a third party learns retrieve information, and a privacy can be protected. Incidentally, some restrictions may be placed so that downloading is conducted unconditionally up to a certain specific amount of money, for example, without downloading image data on a one-hundred percent basis.

Further, a service to store image data on a recording medium as digital image data at a photo shop is also conceivable as another variation. In the variation of this kind, it is conceivable to provide a recording apparatus capable of recording digital data on the removable storage medium stated above in place of the printer 22, and to provide a recording function on the printer 22 itself. In this case, "recording of digital data" is conducted in place of "print" in step S205 in Fig. 4 (b). With regard to processes other than the foregoing, they are the same as the examples stated above, and explanations therefor will be omitted accordingly.

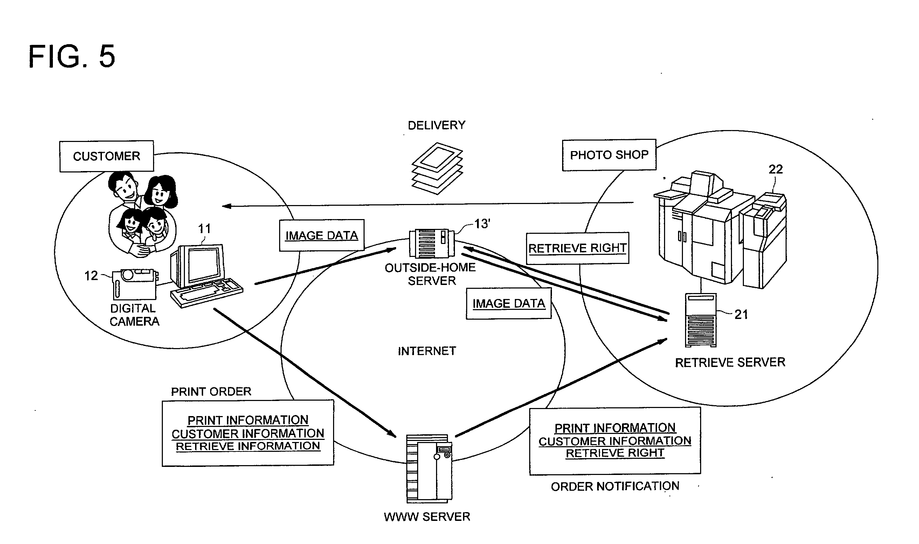

Fig. 5 is a schematic diagram showing the network system relating to the second example. In the second example, outside-home server 13' (for example, those wherein a part of storage areas is rented to a customer like a rental server, to which, however; the invention is not limited) is provided to be outside a home of a customer to be connected to terminal 11 through the network, which is only a difference from the example shown in Fig. 1, and other points are the same as those shown in Figs. 2 and 3, thereby, explanations therefor will be omitted accordingly.

Though the invention has been explained above, referring to the examples of the invention, the invention should not be construed to be limited to the examples mentioned above, and it is naturally possible to modify and improve.

The invention makes it possible to provide an image data handling system, a print generating system and a memory medium making system which make it possible, while protecting a privacy, to retrieve image data for which a print and a memory medium are desired to be made, and thereby, to reduce a storage memory capacity at a photofinishing lab without forcing a load of image uploading upon a customer.

## Claims

1. An image data handling system, comprising:
a home server, connected to a network, for storing image data of a customer;
a retrieve server, connected to said network, for retrieving said image data of said customer stored in said home server; and
a retrieve right issuing server, connected to said network, for issuing a right of said retrieve server to retrieve image data of said customer, stored in said home server;
wherein said home server of said customer allows said retrieve server to retrieve said image data of said customer stored in said home server when said retrieve server has a right to retrieve said image data of said customer stored in said home server.

2. The image data handling system of claim 1, wherein said right to retrieve is issued from said retrieve right issuing server in accordance with permission by said customer for said retrieve right issuing server through said network.

3. An image data handling system, comprising:
an outside-home server, connected to a network, for providing a storage area which stores image data of a customer;
a retrieve server, connected to said network, for retrieving said image data of said customer stored in said storage area of said outside-home server; and
a retrieve right issuing server, connected to said network, for issuing a right of said retrieve server to retrieve said image data of said customer stored in said storage area of said customer of said outside-home server, and when said retrieve server has a right to retrieve image data of said customer stored in said storage area of said outside-home server;
wherein said outside-home server allows said retrieve server to retrieve said image data of said customer stored in said storage area of said outside-home server when said retrieve server has a right to retrieve said image data of said customer stored in said storage area of said outside-home server.

4. The image data handling system of claim 3, wherein said right to retrieve is issued from said retrieve right issuing server in accordance with permission by said customer for said retrieve right issuing server through said network.

5. A print generating system, comprising:
a home server, connected to a network, for storing image data of a customer;
a retrieve server, connected to said network, for retrieving said image data of said customer stored in said home server;
a retrieve right issuing server, connected to said network, for issuing a right of said retrieve server to retrieve image data of said customer, stored in said home server;
wherein said home server of said customer allows said retrieve server to retrieve said image data of said customer stored in said home server when said retrieve server has a right to retrieve said image data of said customer stored in said home server; and
a printer for generating a print in accordance with said image data of said customer retrieved by said retrieve server.

6. The print generating system of claim 5, wherein said right to retrieve is issued from said retrieve right issuing server in accordance with permission by said customer for said retrieve right issuing server through said network.

7. A print generating system, comprising:
an outside-home server, connected to a network, for providing a storage area which stores image data of a customer;
a retrieve server, connected to said network, for retrieving said image data of said customer stored in said storage area of said outside-home server;
a retrieve right issuing server, connected to said network, for issuing a right of said retrieve server to retrieve said image data of said customer stored in said storage area of said customer of said outside-home server, and when said retrieve server has a right to retrieve image data of said customer stored in said storage area of said outside-home server;
wherein said outside-home server allows said retrieve server to retrieve said image data of said customer stored in said storage area of said outside-home server when said retrieve server has a right to retrieve said image data of said customer stored in said storage area of said outside-home server; and
a printer for generating a print in accordance with said image data of said customer retrieved by said retrieve server.

8. The print generating system of claim 7, wherein said right to retrieve is issued from said retrieve right issuing server in accordance with permission by said customer for said retrieve right issuing server through said network.

9. A memory medium making system, comprising:
a home server, connected to a network, for storing image data of a customer;
a retrieve server, connected to said network, for retrieving said image data of said customer stored in said home server;
a retrieve right issuing server, connected to said network, for issuing a right of said retrieve server to retrieve image data of said customer, stored in said home server;
wherein said home server of said customer allows said retrieve server to retrieve said image data of said customer stored in said home server when said retrieve server has a right to retrieve said image data of said customer stored in said home server; and
a storage means for storing said image data, of said customer retrieved by said retrieve server, as digital data on said removable recording medium.

10. The memory medium making system of claim 9, wherein said right to retrieve is issued from said retrieve right issuing server in accordance with permission by said customer for said retrieve right issuing server through said network.

11. A memory medium making system, comprising:
an outside-home server, connected to a network, for providing a storage area which stores image data of a customer;
a retrieve server, connected to said network, for retrieving said image data of said customer stored in said storage area of said outside-home server;
a retrieve right issuing server, connected to said network, for issuing a right of said retrieve server to retrieve said image data of said customer stored in said storage area of said customer of said outside-home server, and when said retrieve server has a right to retrieve image data of said customer stored in said storage area of said outside-home server;
wherein said outside-home server allows said retrieve server to retrieve said image data of said customer stored in said storage area of said outside-home server when said retrieve server has a right to retrieve said image data of said customer stored in said storage area of said outside-home server; and
a storage means for storing said image data, of said customer retrieved by said retrieve server, as digital data on said removable recording medium.

12. The memory medium making system of claim 11, wherein said right to retrieve is issued from said retrieve right issuing server in accordance with permission by said customer for said retrieve right issuing server through said network.
